(19)

**Europäisches Patentamt**

**European Patent Office**

**Office européen des brevets**

(11) **EP 4 679 058 A1**

(12) **EUROPEAN PATENT APPLICATION**

(43) Date of publication:
**14.01.2026 Bulletin 2026/03**

(21) Application number: **24188178.8**

(22) Date of filing: **12.07.2024**

(51) International Patent Classification (IPC):
**G01N 13/02** *(2006.01)*

(52) Cooperative Patent Classification (CPC):
**G01N 13/02; G01N 2013/0241**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
- **Université Libre de Bruxelles
  1050 Bruxelles (BE)**
- **Université de Liège
  4000 Liège (BE)**

(72) Inventors:
- **SCHEID, Benoit
  1310 La Hulpe (BE)**
- **MIGUET, Jonas
  94250 Gentilly (FR)**
- **DORBOLO, Stéphane
  4050 Chaudfontaine (BE)**

(74) Representative: **De Clercq & Partners
Edgard Gevaertdreef 10a
9830 Sint-Martens-Latem (BE)**

(54) **METHOD AND SYSTEM FOR DETERMINING THE GAS-LIQUID MASS TRANSFER COEFFICIENT**

(57) The invention is broadly in the field of gas-fluid dynamics, more precisely in the field of mass transfer. The invention relates to a method and a system for determining the gas-liquid mass transfer coefficient of a solution and uses thereof.

Figure 1

## Description

## FIELD OF INVENTION

The invention is broadly in the field of gas-fluid dynamics, more precisely in the field of mass transfer. The invention relates to a method and a system for determining the gas-liquid mass transfer coefficient of a solution and uses thereof.

## BACKGROUND

The study of mass transfer between gases and moving fluids is essential across diverse industrial sectors such as chemical, biochemical, petrochemical, and pharmaceutical industries, where it plays a crucial role in multi-phase reactor processes. This field is characterized by its complexity, influenced by factors including gas absorption dynamics, chemical reactions, and the behavior of bubbles within fluid flows. Central to quantifying these interactions is the mass transfer coefficient (MTC), which also impacts the stability and efficiency of systems. Bubble columns serve as controlled environments for studying these processes, allowing to measure and analyze the rate at which gases transfer between phases. Measuring mass transfer coefficients in bubble columns requires large and costly facilities. Due to the high-density contrast with the surrounding liquid, bubbles are released at the bottom and rise in the column at high and varying velocities, making it difficult to measure the associated mass transfer coefficient. Challenges such as maintaining column cleanliness, accurately assessing surfactant interactions, and managing the dynamic behavior of rising bubbles underscore the complexities involved. Furthermore, accurately determining surfactant adsorption on bubble surfaces is another issue, often complicating the interpretation of results and affecting process optimization.

Therefore, there remains a need in the art to optimize the measurement of gas-liquid mass transfer coefficients for applications ranging from oxygenation in biological processes to the absorption and removal of volatile compounds in chemical reactions, thus supporting crucial industrial operations.

## SUMMARY

Present inventors developed a novel method and system to determine the gas-liquid mass transfer coefficient of a solution of interest. The method uses antibubbles for measuring mass transfer coefficients in various solutions. Antibubbles are bubbles composed of a liquid core encapsulated by a thin gas shell, immersed in a bulk liquid. This unique structure results in a significantly larger contact area (surface of exchange) with the surrounding liquid compared to an equivalent bubble carrying the same amount of gas. Calculations have shown that utilizing antibubbles for liquid-gas mass transfer allows for the design of column reactors that are at least 30 times smaller than those using bubbles. Furthermore, the method and system enable fine control of the residence time of antibubbles in a column through methods such as controlling the counter-current flow or loading the liquid core. This control allows the total amount of gas within the antibubbles to be processed in one pass, facilitating the use of the antibubble column in continuous mode. Additionally, due to their low-density contrast with the surrounding liquid, antibubbles rise much slower than bubbles. This slow ascent allows for tracking of their velocity, enabling in-situ measurement of the mass transfer coefficient.

The method and the system make it feasible to screen the mass transfer efficiency of the process under various conditions, such as different counter-current flow rates, surfactants, and species concentrations. The invention thus represents a significant advancement in the fields of fluid dynamics and mass transfer, offering enhanced measurement techniques and practical applications for optimizing industrial processes, environmental monitoring, and biomedical applications.

Accordingly, an aspect provides a method for determining the gas-liquid mass transfer coefficient of a solution of interest, comprising the steps of:

- providing a column with a solution of interest;
- generating an antibubble, said antibubble being a spherical thin film of gas of interest, enclosing said solution of interest, in said solution of interest;
- releasing the antibubble in the solution of interest at the bottom part of the column or at the top part of the column;
- monitoring the path of said antibubble through said column; and;
- determining from the path of said antibubble through said column the mass transfer coefficient of said solution of interest with said gas of interest.

In a certain embodiment, the gas used in said antibubble comprises air in combination with a gas with a low solubility chosen from the group of fluorocarbons, preferably the group of perfluorocarbons. Preferably the gas with a low solubility is chosen from gases comprising a fluorinated compound.

In a certain embodiment, a surfactant is added to the solution of interest, the surfactant being selected from the group consisting of non-ionic surfactant and ionic surfactants such as an anionic surfactant, a zwitterionic surfactant, a cationic surfactant or a combination thereof.

A further aspect provides a system for measuring the mass transfer coefficient of solutions of interest, said system comprising a column suitable for containing solutions of interest, an antibubble injector configured to inject one or more antibubbles at the bottom part of said column or at the top part of said column, a monitoring system adapted to monitor the path of the one or more antibubbles through said column and generating an output data including the position of the one or more antibubbles over time, and a processing unit configured to receive the monitoring system output data and determine from said output data the mass transfer coefficient of the solutions of interest.

A further aspect provides a use of antibubbles for determining a gas-liquid mass transfer coefficient of a solution.

A further aspect provides a use as described herein, wherein a system as described herein is used to determine a gas-liquid mass transfer coefficient of a solution.

These and further aspects and preferred embodiments of the invention are described in the following sections and in the appended claims. The subject-matter of the appended claims is hereby specifically incorporated in this specification.

## BRIEF DESCRIPTION OF DRAWINGS

The following description of the figures of specific embodiments of the invention is merely exemplary in nature and is not intended to limit the present teachings, their applications or uses.

> Figure 1 shows a representation of an antibubble column used in the method according to the invention.
> Figure 2 shows graphs depicting the recorded velocities of antibubbles under different conditions.
> Figure 3 represents the measured mass transfer coefficient using the method of the invention as compared to the predicted theoretical values (Frossling and Higbie).

## DESCRIPTION OF EMBODIMENTS

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of", which enjoy well-established meanings in patent terminology.

The recitation of numerical ranges by endpoints includes all intervening values between the lower and upper endpoints, as well as the recited endpoints. Intervening values may be integers or, where applicable, fractions, i.e., more broadly any real numbers such as any rational numbers. This applies to numerical ranges irrespective of whether they are introduced by the expression "from... to..." or the expression "between... and..." or another expression. Any numerical range recited herein is intended to include all sub-ranges subsumed therein. For example, each sub-range between any stated value in a stated range and any other stated value in that stated range is also specifically disclosed. Each sub-range between any stated value in a stated range and either the lower endpoint or the upper endpoint of the stated range is also specifically disclosed. The stated value may be an isolated value or an endpoint of a range subsumed by or overlapping with the stated range. For example, for a stated range with lower endpoint L1 and upper endpoint U1 (i.e., stated range L1-U1) and a stated sub-range nested within the stated range with lower endpoint L2 and upper endpoint U2 (i.e., stated sub-range L2-U2), also specifically disclosed are the subranges L1-L2, L1-U2, L2-U1, and U2-U1. The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein. Whereas the terms "one or more" or "at least one", such as one or more members or at least one member of a group of members, is clear per se, by means of further exemplification, the term encompasses inter alia a reference to any one of said members, or to any two or more of said members, such as, e.g., any $\geq 3$, $\geq 4$, $\geq 5$, $\geq 6$ or $\geq 7$ etc. of said members, and up to all said members. In another example, "one or more" or "at least one" may refer to 1, 2, 3, 4, 5, 6, 7 or more.

As used herein, the term "and/or" when used in a list of two or more items, means that any one of the listed items can be employed by itself or any combination of two or more of the listed items can be employed. For example, if a list is described as comprising group A, B, and/or C, the list can comprise A alone, B alone, C alone, A and B in combination, A and C in combination, B and C in combination, or A, B, and C in combination.

The discussion of the background to the invention herein is included to explain the context of the invention. This is not to be taken as an admission that any of the material referred to was published, known, or part of the common general knowledge in any country as of the priority date of any of the claims.

Throughout this disclosure, various publications, patents and published patent specifications are referenced by an identifying citation. All documents cited in the present specification are hereby incorporated by reference in their entirety. In particular, the teachings or sections of such documents herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation is meant to apply throughout this specification, i.e., also in the context of other aspects or embodiments of the invention, unless otherwise defined.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

Similarly, it should be appreciated that in the description of illustrative embodiments of the invention, various features of the invention are sometimes grouped together in a single embodiment, figure, or description thereof for the purpose of streamlining the disclosure and aiding in the understanding of one or more of the various inventive aspects.

In the present description of the invention, reference is made to the accompanying drawings that form a part hereof, and in which are shown by way of illustration only of specific embodiments in which the invention may be practiced. Parenthesized or emboldened reference numerals affixed to respective elements merely exemplify the elements by way of example, with which it is not intended to limit the respective elements. Unless otherwise indicated, all figures and drawings in this document are not to scale and are chosen for the purpose of illustrating different embodiments of the invention. In particular the dimensions of the various components are depicted in illustrative terms only, and no relationship between the dimensions of the various components should be inferred from the drawings, unless so indicated.

The present inventors have developed a novel method, system, and uses thereof to determine the gas-liquid mass transfer coefficient of a solution of interest using antibubbles. Antibubbles, which are composed of a liquid core encapsulated by a thin gas shell and immersed in the solution of interest, comprise a significantly larger surface of exchange with the surrounding liquid compared to a bubble carrying the same amount of gas. The inventors have demonstrated that utilizing antibubbles for liquid-gas mass transfer enables the design of column reactors that are smaller than those using bubbles. The inventors have demonstrated that utilizing antibubbles for liquid-gas mass transfer enables the design of column reactors that are at least 10, at least 20, at least 25, at least 30, at least 40, at least 50, at least 60, at least 70, at least 80, at least 90, at least 100 times smaller than those using bubbles, preferably at least 30 times smaller. Additionally, the method and system provide fine control over the residence time of antibubbles in a column through techniques such as controlling the counter-current flow or loading the liquid core. This control allows the total amount of gas within the antibubbles to be processed in one pass, facilitating continuous mode operation of the antibubble column. Furthermore, due to their low-density contrast with the surrounding liquid, antibubbles rise much slower than bubbles. This slower ascent allows for the tracking of the velocity of the antibubble, enabling in-situ measurement of the mass transfer coefficient. Accordingly, an aspect provides a method for determining the gas-liquid mass transfer coefficient of a solution of interest, comprising the steps of:

- providing a column with a solution of interest;
- generating an antibubble, said antibubble being a spherical thin film of gas of interest, enclosing a core of liquid, in said solution of interest;
- releasing the antibubble at the bottom part of the column or at the top part of the column;
- monitoring the path of said antibubble through said column; and;
- determining from the path of said antibubble through said column the gas-liquid mass transfer coefficient of said solution of interest with said gas of interest.

As used herein, the term "antibubble" generally refers to a fluidic structure comprising a core of liquid encapsulated within a thin film of gas, surrounded by an outer liquid medium. This structure can be formed when a liquid core, upon entering another liquid medium, captures a thin layer of gas around itself, resulting in a gas-liquid interface that encloses the liquid core.

As used herein, the term "path" of the antibubble refers to the trajectory or course that the antibubble follows as it moves through a column comprising the solution of interest. This path can be influenced by various factors, including buoyancy forces, which are influenced by the difference in density between the antibubble's core of liquid and the surrounding liquid, as well as by the amount of gas within the thin film, affecting whether the antibubble rises, sinks, or remains suspended.

In particular embodiments, the core of liquid can comprise a liquid with a density higher than the density of the solution of interest. In particular embodiments, the core of liquid can comprise a liquid with a density lower than the density of the solution of interest. In particular embodiments, the core of liquid can comprise a liquid with a density similar to the density of the solution of interest. In particular embodiments, the core of liquid and the solution of interest comprise the same liquid. In particular embodiments, the core of liquid and the solution of interest are different liquids.

In particular embodiments, the thin film of gas in the antibubble can comprise air in combination with a gas with a low solubility chosen from the group of gases comprising a fluorinated compound including, but not limited to, sulfur hexafluoride and fluorocarbons such as perfluorocarbons. Advantageously, gases comprising a fluorinated compound can lower the air partial pressure in the thin film of gas of the antibubble such that the antibubble becomes less sensitive to small deviation from equilibrium within the solution of interest in the column.

In embodiments, the thin film of gas in the antibubble comprises an air partial pressure lower than atmospheric pressure. In embodiments, the thin film of gas in the antibubble initially comprises a reduced partial pressure of air.

As used herein, the term "gases comprising a fluorinated compound" typically refers to gases comprising molecules where fluorine atoms are bonded to other elements, typically carbon. Advantageously, the carbon-fluorine bonds enhance the chemical stability of the gas. In embodiments, gases comprising a fluorinated compound typically exhibit low solubility. These gases comprising a fluorinated compound can possess strong intramolecular forces, such as van der Waals forces, stemming from the electronegativity of fluorine atoms. Their intrinsic symmetries however make them typically non-polar or only slightly polar, further limiting their solubility in polar and aqueous solutions.

As used herein, the term "perfluorocarbons" area class of organic compounds consisting exclusively of carbon and fluorine atoms. Perfluorocarbons can be characterized by their substitution of hydrogen atoms in hydrocarbons with fluorine atoms. Advantageously, perfluorocarbons are chemically stable due to the strong carbon-fluorine bonds. In embodiments, perfluorocarbons can be inert, non-reactive with other chemicals, and possess low surface tension, allowing them to form uniform coatings on surfaces. Examples of perfluorocarbons include, but not limited to, perfluoromethane ($CF_4$), perfluoroethane ($C_2F_6$), perfluoropropane ($C_3F_8$), perfluorobutane ($C_4F_{10}$), perfluorohexane ($C_6F_{14}$), and perfluorooctane ($C_8F_{18}$). In a preferred embodiment, the thin film of gas in the antibubble comprises perfluorohexane.

In embodiments, the core of liquid of the antibubble can be supersaturated with air or other watersoluble gases such as carbon monoxide (CO) or carbon dioxide ($CO_2$), increasing their concentration by at least 10%, at least 11%, at least 12%, at least 13%, at least 14%, or at least 15%.

As used herein, the term "supersaturated" or "supersaturation" can be synonymous for over-saturation or overloading and generally refers to a liquid comprising a gas at a concentration beyond its normal saturation point under given conditions. This involves deliberately exceeding the solubility limit of the gas in the liquid, resulting in a state where the liquid comprises more dissolved gas than it typically would under equilibrium conditions.

In embodiments, monitoring the path of said antibubble through said column comprises monitoring through time the dimension and position of the antibubble.

As used herein, the term "monitoring" generally refers to systematic observation, measurement, and/or recording of parameters, or activities over a period of time. In embodiments, monitoring the path of an antibubble through a column can comprise systematically observing, measurement, and/or recording the antibubble's movement and/or behavior as it traverses within column with a solution of interest. This monitoring can include various parameters such as the antibubble's position in the column, the dimensions of the antibubble, such as size, the velocity, the direction in which the antibubbles moves, and liquid flow rate.

As used herein, the term "dimensions" of the antibubble refers to the measurable size and shape of the antibubble. This can include parameters such as the antibubble's diameter, volume, or the thickness of the thin gas film surrounding the liquid core.

In embodiments, monitoring the positions of the antibubble over time can comprise monitoring the changing locations within the column of the antibubble as it moves through the solution of interest. In embodiments, monitoring the positions can involve tracking the trajectory of the antibubble and its positions at regular intervals. This allows for the analysis and determination of the movement patterns, velocity, and/or behavior of the antibubble within the solution of interest.

In embodiments, the path of the antibubble is monitored after the antibubble has reached steady state velocity.

As used herein, the term "steady state velocity" generally refers to the stable speed at which the antibubble moves through the solution of interest after initial transient effects have diminished. In embodiments, in this state, the velocity is (nearly) constant but can minimally fluctuate around an average value.

In embodiments, the steady state velocity can be achieved in about a second after the antibubble has been formed.

In embodiments, a stagnant cap is formed on the outer surface of the antibubble as the antibubble has reached steady state velocity.

As used herein, the term "stagnant cap" generally refers to the region of the outer surface of the antibubble where the surface remains relatively motionless, or "stagnant," due to the presence of surfactants. In embodiments, a stagnant cap is formed when surfactants are present or accumulate at the interface between the thin film of gas of the antibubble and the surrounding solution of interest. These surfactants reduce the mobility of the liquid interface within this region, creating a partially rigid or rigid area that does not flow or move as freely as the rest of the antibubble's outer surface in its moving reference frame. In embodiments, the stagnant cap can influence the dynamics of the antibubble, including, but not limited to, the antibubble's shape, stability, and the gas-liquid mass transfer processes occurring at the interface.

In embodiments, a surfactant is added to the solution of interest, the surfactant is selected from the group consisting of non-ionic surfactant and ionic surfactants such as an anionic surfactant, a zwitterionic surfactant, a cationic surfactant or a combination thereof.

As used herein, the term "surfactants" generally refers to compounds that reduce surface tension between the thin film gas of the antibubble and the solution of interest. In embodiments, surfactants are present at interface between the thin gas film of the antibubble and the solution of interest. In embodiments, surfactants can have hydrophilic heads that attract water and hydrophobic tails that repel water and attract oils and fats. By concentrating at these interfaces, surfactants can lower the surface tension, facilitating the mixing or spreading of phases. Several types of surfactants are known, including, but not limited to, anionic, cationic, non-ionic, amphoteric and zwitterionic surfactants.

As used herein, the term "anionic surfactants" refers to a class of surfactants that carry a negative charge on their hydrophilic (water-attracting) head. This negative charge allows them to interact with positively charged particles and surfaces. Examples of anionic surfactants comprise sulfates, such as sodium laureth sulfate (SLES) or sodium dodecyl sulfate (SDS), sulfonates, such as linear alkylbenzene sulfonate (LAS), carboxylates, fatty acids such as myristic acid, palmitic acid, stearic acid, oleic acid, and 12-hydroxy-stearic acid. In a preferred embodiment, the anionic surfactant is SLES or SDS.

As used herein, the term "cationic surfactants" refers to a class of surfactants characterized by their positively charged hydrophilic (water-attracting) head groups. This positive charge allows them to interact with negatively charged particles and surfaces. Examples of cationic surfactants include quaternary ammonium compounds (quats) like cetrimonium chloride and cetyltri-methylammonium bromide ($C_{16}$TAB). In a preferred embodiment, the cationic surfactants is $C_{16}$TAB.

As used herein, the term "non-ionic surfactants" refers to a class of surfactants that do not comprise an electrical charge in their hydrophilic (water-attracting) head groups. In embodiments, non-ionic surfactants are electrically neutral. Examples of non-ionic surfactants include polysorbates (PS) such as polysorbate 80 and polysorbate 20, decyl oleates (DOH), alkyl polyglucosides, polyethylene glycol ethers, such as Triton-X-100, and ethoxylated alcohols, such as polyoxyethylene 20, polyoxyethylene (6) dodecyl ether ($C_{12}E_6$) and sorbitan monolaurate. Advantageously, non-ionic surfactants exhibit low toxicity, and good stability in formulations. In a preferred embodiment, the non-ionic surfactant is DOH, Triton-X-100, $C_{12}E_6$, PS20, or PS80.

As used herein, the term "zwitterionic surfactants" generally refers to a class of surfactants characterized by molecules comprising both positively and negatively charged groups within the same molecule, resulting in an overall neutral charge. Examples of zwitterionic surfactants include betaine such as cocamidopropyl betaine (CAPB). In a preferred embodiment, the zwitterionic surfactant is CAPB.

As used herein, the term "amphoteric surfactants" generally refers to a class of surfactants that exhibit dual charge properties depending on the pH of the surrounding environment. In embodiments, amphoteric surfactants contain both acidic and basic functional groups within their molecular structure, allowing them to behave as cationic (positively charged) at low pH and as anionic (negatively charged) at high pH. Examples of amphoteric surfactants include Betaine such as cocamidopropyl betaine (CAPB), coco betaine, lauryl betaine, and sulfobetaine. In a preferred embodiment, the amphoteric surfactant is CAPB.

In certain embodiments, surfactants can be a combination of an anionic surfactant and zwitterionic surfactant or amphoteric surfactant such as SLES and CAPB or myristic acid, CAPB and SLES or a combination of an anionic surfactant and non-ionic surfactant, such as SDS and DOH.

In embodiments, the antibubble includes a surfactant at concentration ranging from about 0.20 g/L to 50.0 g/L, from about 1.0 g/L to 45.0 g/L, from about 5.0 g/L to 40.0 g/L, from about 10.0 g/L to 35.0 g/L, from about 15.0 g/L to 30.0 g/L, and from about 20.0 g/L to 25.0 g/L. In embodiments, the antibubble includes an anionic surfactant at concentration ranging from about 1.0 g/L to 10.0 g/L, from about 1.5 g/L to 9.5 g/L, from about 2.0 g/L to 9.0 g/L, from about 2.5 g/L to 8.5 g/L, from about 3.0 g/L to 8.0 g/L, from about 3.5 g/L to 7.5 g/L, from about 4.0 g/L to 7.0 g/L, from about 4.5 g/L to 6.5 g/L, or from about 5.0 g/L to 6.0 g/L. In embodiments, the antibubble includes a cationic surfactant at concentration ranging from 0.2 g/L to 3.3 g/L, from about 0.5 g/L to 3.0 g/L, from about 1.0 g/L to 2.5 g/L, or from about 1.5 g/L to 2.0 g/L. In embodiments, the antibubble includes a non-ionic surfactant at concentration ranging from 0.7 g/L to 1.4 g/L, from about 0.8 g/L to 1.3 g/L, from about 0.9 g/L to 1.2 g/L, or from about 1.0 g/L to 1.1 g/L. In embodiments, the antibubble comprises a combination of an anionic surfactant and zwitterionic surfactant, such as SLES and CAPB, at concentration ranging from 1.2 g/L to 50 g/L, from about 1.2 g/L to 45.0 g/L, from about 5.0 g/L to 40.0 g/L, from about 10.0 g/L to 35.0 g/L, from about 15.0 g/L to 30.0 g/L, and from about 20.0 g/L to 25.0 g/L. In embodiments, the antibubble comprises a combination of an anionic surfactant and non-ionic surfactant, such as SDS and DOH, at concentration ranging from 1.2 to 5.7 g/L, from about 1.5 g/L to 5.5 g/L, from about 2.0 g/L to 4.5 g/L, from about 2.5 g/L to 4.0 g/L, from about 3.0 g/L to 3.5 g/L.

In embodiments, the stagnant cap comprises an angle that increases with the concentration of surfactant. In embodiments, when the concentration of surfactant at the outer surface of the antibubble increases, it can lead to the formation of a stagnant cap with an increasing angle. This angle can refer to the proportion of the outer interface that is immobile with respect to the antibubble. In embodiments, at lower concentrations of surfactant, the interface may exhibit partial rigidity, meaning that it can move faster under external forces. In embodiments, at higher concentration of surfactant, the interface between the antibubble and the solution of interest becomes more rigid. In embodiments, the outer surface of the antibubble, typically at higher concentration of surfactant, is sufficiently covered by surfactants, typically around at least 2/3 of the outer surface of the antibubble is covered. Advantageously, a larger coverage of the outer surface of the antibubble enables the interface to be rigid, thereby reducing the movement of the antibubble.

In embodiments, said determining step comprises determining a vertical velocity of the antibubble during the steady state velocity of the antibubble based on the data gathered in the monitoring step.

As used herein, the term "vertical velocity" generally refers to the speed or rate of movement of the antibubble in the solution of interest in the column. In embodiments, the vertical velocity can comprise regardless the ascending velocity or the descending velocity of the antibubble in the solution of interest in the column. In embodiments, the vertical velocity relates to the rate at which antibubbles move along the vertical axis within the solution of interest in the column.

In particular embodiments, the vertical velocity can be determined based on the position of the antibubble in the column over time. Mathematically the vertical velocity can be represented as:

$$U = (z_{i+1} - z_i) / \Delta t$$

Where:

- U is the vertical velocity
- $z_i$ is the position of the antibubble at time step i
- $\Delta t$ is the time between successive measured positions of the antibubble

As used herein, the term "ascending velocity" generally refers to the speed or rate of the upward movement of the antibubble in the solution of interest in the column. In embodiments, ascending velocity relates to the rate at which antibubbles moves upwards along the vertical axis within the solution of interest in the column. In preferred embodiments, the ascending velocity increases gradually over time.

The ascending velocity of antibubbles in the solution of interest can vary, for example depending on the dimensions of the antibubble.

In embodiments, the liquid core of the antibubble comprises a density equal to or lower than the density of the solution of interest in the column. In embodiments, the antibubble can be released at the bottom part of the column, such as at the bottom half of the column, the bottom third of the column, or at the bottom of the column. In embodiments, the antibubble can move upwards in the solution of interest in the column during the step of monitoring the path of the antibubble.

In embodiments, the liquid core of the antibubble comprises a density higher than the density of the solution of interest in the column. In embodiments, the antibubble can be released at the top part of the column, such as at the top half of the column, the top third of the column, or at the top of the column. In embodiments, the antibubble can move downwards in the solution of interest in the column during the step of monitoring the path of the antibubble.

As used herein, the term "descending velocity" generally refers the speed or rate of the downward movement of the antibubble in the solution of interest in the column. In embodiments, ascending velocity relates to the rate at which antibubbles moves downwards along the vertical axis within the solution of interest in the column. In preferred embodiments, the descending velocity gradually increases over time.

In embodiments, monitoring the path of the antibubble comprises monitoring the path of the antibubbles during a time period of at least 0.50 minute, 1.00 minutes, 1.50 minutes, 2.00 minutes, 2.50 minutes, 3.00 minutes, 3.50 minutes, 4.00 minutes, 4.50 minutes, 5.00 minutes, 5.50 minutes, 6.00 minutes, 6.50 minutes, 7.00 minutes, 7.50 minutes, 8.00 minutes, 8.50 minutes, 9.00 minutes, 9.50 minutes, or 10.00 minutes. In embodiments, monitoring the path of the antibubble comprises monitoring at least 3, at least 4, at least 5, at least 6, at least 7, at least 8, at least 9, at least 10 positions of the path of the antibubble.

In particular embodiments, the gas-liquid mass transfer coefficient of the solution of interest can be determined based on the variation of the vertical velocity . Mathematically the gas-liquid mass transfer coefficient can be represented as:

$$1/k_{tot} = (1/k_{ML}) + (1/k)$$

Where:

- $k_{tot}$ is the total gas-liquid mass transfer coefficient
- $k$ is the liquid-side mass transfer coefficient
- $k_{ML}$ is the mass transfer coefficient of the outer interface of the antibubble.

In embodiments, the variation of the vertical velocity of the antibubble can be determined by the positions of the antibubble in the column through time. In embodiments, the positions of the antibubble in the column can be determined about every 0.50 second, 1.00 seconds, 1.50 seconds, 2.00 seconds, 2.50 seconds, 3.00 seconds, 3.50 seconds, 4.00 seconds, 4.50 seconds, 5.00 seconds, 5.50 seconds, 6.00 seconds, 6.50 seconds, 7.00 seconds, 7.50 seconds, 8.00 seconds, 8.50 seconds, 9.00 seconds, 9.50 seconds, or 10.00 seconds. In embodiments, the vertical velocity of the antibubble can be determined by at least 3, at least 4, at least 5, at least 6, at least 7, at least 8, at least 9, at least 10 positions of the path of the antibubble in the column through time. In embodiments, the variation of the vertical velocity of the antibubble is almost constant over time.

A further aspect relates to a system for measuring the mass transfer coefficient of solutions of interest, said system comprising a column suitable for containing solutions of interest, an antibubble injector configured to inject one or more antibubbles at the bottom part or the top part of the column, a monitoring system adapted to monitor the path of the one or more antibubbles through the column and generating an output data including a position of the one or more antibubbles over time, and a processing unit configured to receive the monitoring system output data and determine from said output data the gas-liquid mass transfer coefficient of the solutions of interest.

As used herein, the term "a processing unit" refers to an electronic component or a combination of components within a system and is designed to perform a computational task. In embodiments, the processing unit is configured to receive the monitoring system output data and determine the gas-liquid mass transfer coefficient of the solutions of interest based on the monitoring system output data and generate an output data comprising the gas-liquid mass transfer coefficient of the solutions of interest. Examples of processing units can include, but are not limited to, central processing units (CPUs), microcontrollers (MCUs), digital signal processors (DSPs), and application-specific integrated circuits (ASICs).

In embodiments, the antibubble injector is configured to inject one or more antibubbles at the top part of the column, such as at the top half of the column, the top third of the column, or at the top of the column. In embodiments, the antibubble injector is configured to inject one or more antibubbles at the bottom part of the column, such as at the bottom half of the column, the bottom third of the column, or at the bottom of the column.

In embodiments, the antibubble injector can be made from materials including fluoropolymers such as PTFE (Polytetrafluoroethylene) and FEP (Fluorinated ethylene propylene), known for their chemical resistance and inertness, ensuring minimal interaction with both the injected solution and the antibubble formation process. Additionally, the antibubble injector can be made of stainless steel or, plastics such as polypropylene or polyvinyl chloride (PVC).

In embodiments, the monitoring system can comprise a camera for recording the path of said one or more antibubbles through the column in the solution of interest. In embodiments, the camera records the path of one or more antibubbles by recording various positions of the one or more antibubbles over time. In embodiments, the camera records the positions of the antibubble in the column about every 0.50 second, 1.00 seconds, 1.50 seconds, 2.00 seconds, 2.50 seconds, 3.00 seconds, 3.50 seconds, 4.00 seconds, 4.50 seconds, 5.00 seconds, 5.50 seconds, 6.00 seconds, 6.50 seconds, 7.00 seconds, 7.50 seconds, 8.00 seconds, 8.50 seconds, 9.00 seconds, 9.50 seconds, or 10.00 seconds. In embodiments, the camera records at least 3, at least 4, at least 5, at least 6, at least 7, at least 8, at least 9, at least 10 positions of the path of the antibubble in the column through time.

In embodiment, the system further comprises a diffuser for uniformly illuminating the path of the antibubbles in the column. In embodiment, the system further comprises a diffuser for illuminating the column.

As used herein, the term "diffuser" generally refers to devices or materials which scatter or spread light uniformly across a surface or space. Diffusers can reduce glare and harsh shadows, providing a consistent and even illumination. Examples of diffusers are tracing paper, acrylic panels, plastic sheets, light diffusion films, or fabrics.

In embodiments, the processing unit is configured to determine from images recorded by the camera the position of the one or more antibubbles through the column in the solution of interest. In embodiments, said processing unit is configured to determine a variation of a vertical velocity, such as an ascending or descending velocity, from the output data and apply empirical correlations to determine the mass transfer coefficient. In particular embodiments, the processing unit can determine the vertical velocity based on the position of the antibubble in the column over time. Mathematically processing unit can determine the vertical velocity as:

$$U = (z_{i+1} - z_i) / \Delta t$$

Where:

- U is the vertical velocity
- $z_i$ is the position of the antibubble at time step i
- $\Delta t$ is the time between successive positions of the antibubble

In embodiments, the processing unit can determine the gas-liquid mass transfer coefficient of the solution of interest based on the variation of the vertical velocity. Mathematically the gas-liquid mass transfer coefficient can be represented as:

$$1/k_{tot} = (1/k_{ML}) + (1/k)$$

Where:

- $k_{tot}$ is the total gas-liquid mass transfer coefficient
- k is the liquid-side mass transfer coefficient
- $k_{ML}$ is the mass transfer coefficient of the outer interface of the antibubble.

A further aspect relates to the use of antibubbles for determining a gas-liquid mass transfer coefficient of a solution.

A further aspect relates to the use of antibubbles as described herein, wherein a system as described herein is used to determining a gas-liquid mass transfer coefficient of a solution.

Unless indicated otherwise, all methods, steps, techniques and manipulations that are not specifically described in detail can be performed and have been performed in a manner known *per se,* as will be clear to the skilled person. Reference is for example again made to standard handbooks as well as to the general background art referred to herein and to the further references cited therein.

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as follows in the spirit and broad scope of the appended claims. The herein disclosed aspects and embodiments of the invention are further supported by the following non-limiting examples.

**EXAMPLES**

**Example 1. Experimental set-up of the antibubble column.**

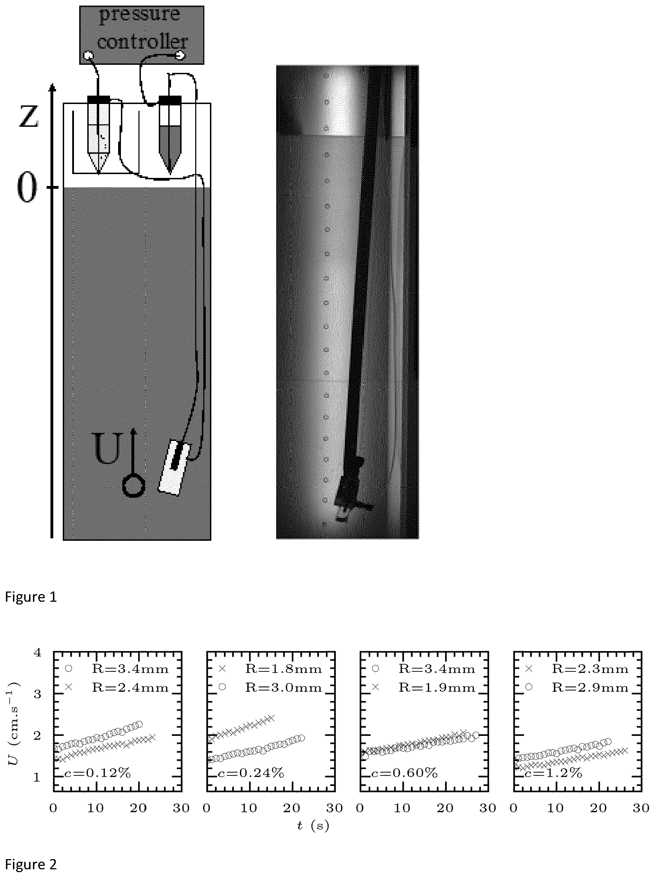

To quantify the gas-liquid mass transfer coefficient with antibubbles, an antibubble column was designed as represented in Figure 1. The right-hand side of the figure represents a superposition of 19 pictures taken at different moments along the antibubble's path, the time lapse between successive pictures being one second. A 12x12x67 cm column, was filled with the solution of interest, and was used as a test vessel. A fluorescent tube was placed behind the column with respect to a camera, and tracing paper was used as a diffuser to get a more homogeneous illumination along the path of antibubbles. A Nikon D3100 camera, was combined with a Nikon AF-S 18-55 mm lens and a timer remote (Phottix TR-90), to take pictures at one frame per second during the rise or sink of the antibubble. The larger dimension of the 3072x4608 pixels sensor was used for the vertical imaging of the system, with a resolution of about 100 $\mu$m/pixels. The production of antibubbles relies on the immersed bell setup: a bell with its aperture facing downwards, slightly tilted to avoid collision, is connected to a pressure controller. The connection of the bell to the pressure controller allows for fine control of the distance between the liquid level in the bell and the injector, necessary for optimized production of antibubbles. It also allows controlling the nature of the gas in the bell that will constitute the thin film of gas. The injector comprises a 1.59mm external diameter fluoropolymer tube, plunged inside the bell and sealed with an appropriate nut/ferrule system. This tube is directly inserted into another tube of inner diameter 1.6mm and waterproofed with polytetrafluoroethylene (PTFE) tape. Once the column was filled with the solution of interest and the bell with gas, the tube containing the injected solution, the same as the host solution, is pressurized (usually a few hundreds of millibars) using a Fluigent MFCZ pressure controller. A microfluidic solenoid valve (2-Switch, Fluigent), controlled with a Python script, was opened for a fixed amount of time, between 50 and 200ms, to form a jet at the tip of the injector. The jet was directed to the liquid surface where it can penetrate through the interface, wrapped with a thin layer of air. This jet then undergoes a Rayleigh-Plateau destabilization that eventually leads to the formation of a pocket of liquid surrounded by a thin film of air that rapidly adopts a spherical shape to minimize the surface area: in other words, an antibubble.

Three different surfactants were used to prepare the solutions. A commercial dishwashing liquid (Dreft) was used to assess the behaviour of the system during the production of antibubbles. More specifically, Dreft is a mixture of sodium lauryl ether sulfate (10-20%), an anionic surfactant, and lauryldimethylamine oxide (1-5%), a zwitterionic one. Other surfactant systems were used, namely hexadecyltrimethylammonium bromide (Merck, H5882) and polysorbate 80 (Merck, P1754), referred to, respectively, as C16TAB and PS80. C16TAB is a commonly used cationic surfactant with a 16-carbon long hydrophobic alkyl chain and a critical micelle concentration (cmc) of 0.92mM. Polysorbate 80 is a non-ionic surfactant with an 18-carbon long aliphatic chain attached to polyethers that provide some affinity with water. The concentrations were chosen so that antibubbles can be formed.

After formation of the antibubble, its vertical path within the column was recorded, and the images were processed with the Skimage library in Python to get the size and the position as a function of time, from which the ascending velocity was calculated. The ascending velocity was calculated as:

$$U = (z_{i+1} - z_i) / \Delta t$$

Where:

- U is the vertical velocity
- $z_i$ is the position of the antibubble
- $\Delta t$ is the time between successive measured positions of the antibubble

Figure 2 presents the recorded velocities for antibubbles comprising air, Dreft at four different concentrations and perfluorohexane ($C_6F_{14}$). Perfluorohexane (Merck, 281042) was used to decrease the partial pressure of air within the thin film by introducing another gas of low solubility. $C_6F_{14}$ is liquid but volatile under standard conditions, with a vapor pressure of $P_{C6F14} = 0.29$ bar and a Henry's coefficient $K_{H,C_6F_{14}} = 5.4 \times 10{-10}$ molm$^{-3}$ Pa$^{-1}$, which is at least four orders of magnitude lower than those of nitrogen and oxygen, $K_{H,N2} = 6.4 \times 10^{-6}$ molm$^{-3}$ Pa$^{-1}$ and $K_{H,O2} = 1.3 \times 10^{-5}$ molm$^{-3}$ Pa$^{-1}$, respectively. Filtered air is then allowed to slowly pass through a tube filled with liquid $C_6F_{14}$, which has been left at rest for at least one hour to ensure saturated conditions. The partial pressure of saturated air (treated as a single gas) is therefore:

$$P_{g,air} = P_{atm} - P_{C6F14}$$

Wherein $P_{atm}$ is the atmospheric pressure (1.013 bar).

Hence, the volume fraction of air in the film is

$$\alpha \approx P_{g,air}/P_{atm} = (P_{atm} - P_{C6F14})/P_{atm} = 0.705.$$

Three contributions to the temporal evolution of the velocity of the antibubble were identified: (i) the volumetric expansion of the gas caused by the decreasing hydrostatic pressure as the antibubble rises in the column, (ii) the dissolved gas transfer between the air film and the surrounding media, and (iii) the formation of a steady distribution of surfactants along the outer interface, that can lead to the formation of a stagnant cap. This stagnant cap refers to the accumulation of surfactants at the rear of a moving fluid sphere in a liquid which induces a local immobility (or equivalently rigidity) of the interface, in the reference frame of the sphere. In the case of a bubble, the dynamics of formation of this stagnant cap can lead to transient velocities, with initial acceleration, a maximum in the velocity, and then a decrease, until the final plateau value. This process is associated with the build-up of the stagnant cap that 'rigidities' the interface. The final, steady-state velocity was reached in less than one second for intermediate concentrations. In this case, the concentration was relatively high and the velocity small compared to rising bubbles where transient velocities were observed. It was therefore considered that (i) the stagnant cap was immediately formed and remains in a steady state, such that any variation of the velocity should be caused by mass transfers and/or volumetric expansion; (ii) the angle of the stagnant cap was large, so that the antibubbles rise as a rigid sphere, when at least two-thirds of the sphere is covered by surfactants.

Additionally, a typical velocity for thin film drainage is in the order of 100 $\mu$m.s$^{-1}$, while the ascending velocity of the antibubbles U in the column is of the order of 1 cm.s$^{-1}$. Therefore, a Peclet number for the mass transfer was determined as Pe = R*U/D, where D is the diffusion coefficient of the dissolved gas molecules within the liquid, equals to $2 \times 10^{-9}$ m$^2$.s$^{-1}$ and R is the antibubble radius. A Peclet number in the order of $10^4$ for the outer interface of the antibubble was obtained, demonstrating that the convective part was dominant and that the typical velocity at the interface scales with the total mass transfer, which allows to neglect the transfers across the inner interface of the antibubble.

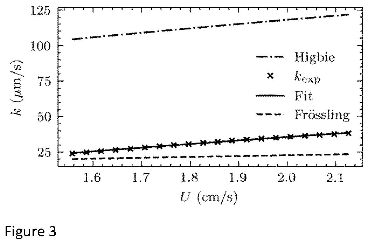

The gas content of the antibubble was modelled as a function of its ascending velocity. The ascending velocity of a $C_6F_{14}$ saturated antibubble was determined as shown in Figure 2, using the procedure described above for the determination of the positions and size of the antibubbles at different times. To process these data, a linear profile was fitted to the experimental one and the mass transfer coefficient k(t) was deduced. The first two points of the velocity profiles (first two seconds) were discarded to avoid non-stationary effects at early stages, due to the settlement of the boundary layer and/or the redistribution of the surfactants induced by the flow. A typical result is presented in Figure 3 wherein in this case the experimental coefficient of the antibubble comprising 0.24% Dreft falls between that predicted for a rigid sphere (Frossling) and that for a mobile one (Higbie). Also, the evolution in time of the mass transfer coefficient, due to the evolution in time of the velocity, follows the relationship:

$$k = k_0 + k_1 \left(\frac{U}{R}\right)^{1/2}$$

where $k_0$ (m.s$^{-1}$) and $k_1$ (m.s$^{-1/2}$) are constants. This treatment leads to the following remarks: (i) the initial measured value for k lies above the rigid limit, (ii) the rate of increase of k as a function of U is between that for the rigid and mobile cases.

In the context of mass transfer through soap films, a non-negligible resistance of the monolayer of surfactants on the gas transfer has been previously reported. Therefore, the total mass transfer coefficient may be written, analogously to the conduction of electricity in series circuits, as:

$$\frac{1}{k_{tot}} = \frac{1}{k_{ML}} + \frac{1}{k}$$

where k is the liquid side mass transfer coefficient and $k_{ML}$ that of the interface covered by a monolayer of surfactants. By using the experimental value for $k_{tot}$ and the Frossling correlation for k, it was found that $k_{ML}$ was 69 and 62 $\mu$m.s$^{-1}$ for 0.6% and 1.2% concentration of surfactants, respectively, suggesting that the permeability is dependent on the partial pressure of $C_6F_{14}$, and that the interaction with that insoluble gas and the hydrophobic tails of surfactants are responsible for the damping of the total permeability.

**Claims**

1. Method for determining the gas-liquid mass transfer coefficient of a solution of interest, comprising the steps of:

    • providing a column with a solution of interest;
    • generating an antibubble, said antibubble being a spherical thin film of gas, enclosing said solution of interest, in said solution of interest;
    • releasing the antibubble in the solution of interest at the bottom part of the column or at the top part of the column;
    • monitoring the path of said antibubble through said column; and;
    • determining from the path of said antibubble through said column the mass transfer coefficient of said solution of interest.

2. Method according to claim 1, wherein the gas used in said antibubble comprises air in combination with a gas with a low solubility chosen from the group of gases comprising a fluorinated compound including, but not limited to, sulfur hexafluoride and fluorocarbons such as perfluorocarbons.

3. Method according to claim 2, wherein said gas with a low solubility is chosen from perfluorocarbons.

4. Method according to any of the previous claims, wherein said monitoring comprises monitoring through time the dimension and position of said antibubble.

5. Method according to any of the previous claims, wherein the path of said antibubble is monitored after the antibubble has reached steady state velocity.

6. Method according to claim 5, wherein a stagnant cap is formed on the outer surface of the antibubble as the antibubble has reached steady state velocity.

7. Method according to claims 5 or 6, wherein said determining step comprises determining a variation of the vertical velocity of the antibubble after the antibubble, reached steady state velocity, is based on the data gathered in the monitoring step.

8. Method according to claim 7, wherein the variation of the vertical velocity of the antibubble is determined by the positions of the antibubble in said column through time.

9. Method according to any of the previous claims, wherein a surfactant is added to the solution of interest, the surfactant is selected from the group consisting of non-ionic surfactant and ionic surfactants such as an anionic surfactant, a zwitterionic surfactant, a cationic surfactant or a combination thereof.

10. System for measuring the mass transfer coefficient of solutions of interest, said system comprising a column suitable for containing solutions of interest, an antibubble injector configured to inject one or more antibubbles at the bottom part of said column or at the top part of said column, a monitoring system adapted to monitor the path of the one or more antibubbles through said column and generating an output data including the position of the one or more antibubbles over time, and a processing unit configured to receive the monitoring system output data and determine from said output data the mass transfer coefficient of the solutions of interest.

11. The system according to claim 10, wherein monitoring system comprises a camera for recording the path of said one or more antibubbles through said column.

12. The system according to claim 11, wherein said processing unit is configured to determine from images recorded by the camera the position of the one or more antibubbles through said column.

13. The system according to any of claims 10 to 12, wherein said processing unit is configured to determine a variation of a vertical velocity, such as an ascending or descending velocity, from the output data and apply empirical correlations to determine the mass transfer coefficient.

14. Use of antibubbles for determining a gas-liquid mass transfer coefficient of a solution.

15. Use according to claim 14, wherein a system according to any one of claims 10 to 13 is used to determining a gas-liquid mass transfer coefficient of a solution.

Figure 1

Figure 2

Figure 3

Europäisches
Patentamt

European
Patent Office

Office européen
des brevets

# EUROPEAN SEARCH REPORT

**Application Number**

EP 24 18 8178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIGUET JONAS ET AL: "Antibubble column: A mean to measure and enhance liquid-gas mass transfer through surfactant-laden interfaces", CHEMICAL ENGENEERING JOURNAL, ELSEVIER, AMSTERDAM, NL, vol. 498, 9 July 2024 (2024-07-09), XP087625971, ISSN: 1385-8947, DOI: 10.1016/J.CEJ.2024.153276 [retrieved on 2024-07-09] * the whole document * ----- | 1-15 | INV. G01N13/02 |
| | | | **TECHNICAL FIELDS SEARCHED (IPC)** |
| | | | G01N |

The present search report has been drawn up for all claims

| Place of search | Date of completion of the search | Examiner |
|---|---|---|
| The Hague | 12 December 2024 | Werth, Jochen |

EPO FORM 1503 03.82 (P04C01)